# EUROPEAN PATENT APPLICATION

(11) **EP 4 779 751 A1**
(43) Date of publication of application: **22.07.2026**
(21) Application number: 25864548.0
(22) Date of filing: 17.07.2025
(51) Int. Cl.: H01M 10/42, H01M 10/48, H01M 10/04, H01M 10/615, G01M 99/00, G01K 7/02

(54) **HEATER AND TEST CELL COMPRISING SAME**

(30) Priority: 16.10.2024 KR 20240141389
(71) Applicant: LG ENERGY SOLUTION, LTD., Seoul 07335 (KR)
(72) Inventor: KIM, Sang Jin, Daejeon 34122 (KR); CHO, Jae Yun, Daejeon 34122 (KR); CHAE, Young Cheol, Daejeon 34122 (KR)
(74) Representative: Plasseraud IP
(86) International application number: PCT/KR2025/010569
(87) International publication number: WO 2026/084192

(57) **Abstract**

The present disclosure relates to a heater and a test cell including the same, and more particularly, to a heating unit for applying heat to a separator exposed beyond a positive electrode or a negative electrode to induce thermal runaway rapidly, in order to prevent damage to an outer packaging during a test for preventing thermal propagation of a battery cell, and a test cell including the same. The test cell according to the present disclosure includes an electrode assembly, a cylindrical outer packaging accommodating the electrode assembly, and a heater formed to be bent along a circumferential direction of the outer packaging and disposed at an outer circumferential surface of the outer packaging to generate heat, and the heater is disposed closer to an end in a length direction of the outer packaging than a center in the length direction of the outer packaging.

## Description

### TECHNICAL FIELD

### CROSS-REFERENCE TO RELATED APPLICATIONS

This application is based on and claims priority from Korean Patent Application No. 10-2024-0141389 filed on October 16, 2024 with the Korean Intellectual Property Office, the disclosure of which is incorporated herein in its entirety by reference.

### TECHNICAL FIELD

The present disclosure relates to a heater and a test cell including the same, and more particularly, to a heater for applying heat to a separator exposed beyond a positive electrode or a negative electrode to induce thermal runaway rapidly, in order to prevent damage to an outer packaging during a test for preventing thermal propagation of a battery cell, and a test cell including the same.

### BACKGROUND ART

Recently, with rising prices of energy sources caused by depletion of fossil fuels and growing concerns about environmental pollution, the need for eco-friendly alternative energy sources is an essential factor for future life. In this circumstance, studies have been conducted on a variety of energy production technologies such as solar, wind and tidal energy, and energy storage devices such as batteries for using the produced electrical energy more efficiently are of great interest.

Moreover, with technology development and increasing demand for electronic mobile devices and electric vehicles using batteries, the demand for batteries as an energy source is rapidly increasing, and accordingly many studies are being conducted on batteries that meet a variety of needs.

Batteries that store electrical energy may be generally classified into primary batteries and secondary batteries. The primary batteries are disposable batteries designed to be used once, whereas the secondary batteries are rechargeable batteries manufactured using materials in which oxidation and reduction are repeated between electric currents and the materials. That is, when reduction reactions occur in the materials by electric currents, charging proceeds, and when oxidation reactions occur in the materials, discharging proceeds, and charging-discharging are repeatedly performed to produce electricity.

More recently, with the use as energy storage sources and the growing need for large-capacity structures, the demand for battery packs including a plurality of secondary batteries or a plurality of battery modules is increasing, and accordingly the demand for battery modules is also increasing.

However, while the battery module is in use, heat is generated from battery cells, causing flame hazards. In this case, the battery module has a loss of a connector due to flames produced from the battery cells, and thermal propagation to adjacent battery modules is accelerated through a space formed by the loss of the connector.

Therefore, to solve this problem, a test is performed by artificially applying heat to a battery cell using a heater, measuring the temperature of the battery cell through a thermocouple, and collecting related data such as the temperature of the heating unit and the battery cell at the time when thermal propagation occurs.

In this instance, during the test, as the exposure time of the battery cell to high temperature increases, the strength of an outer packaging accommodating an electrode assembly of the battery cell significantly decreases, causing damage including a tear in the outer packaging.

### DISCLOSURE

### TECHNICAL PROBLEM

The present disclosure is designed to solve the above-described problems, and therefore the present disclosure is directed to providing a heater for applying heat to a separator exposed beyond a positive electrode or a negative electrode to induce thermal runaway rapidly, in order to prevent damage to an outer packaging during a test for preventing thermal propagation of a battery cell, and a test cell including the same.

### TECHNICAL SOLUTION

A test cell according to the present disclosure includes an electrode assembly, a cylindrical outer packaging accommodating the electrode assembly, and a heater formed to be bent along a circumferential direction of the outer packaging and disposed at an outer circumferential surface of the outer packaging to generate heat, and the heater is disposed closer to an end in a length direction of the outer packaging than a center in the length direction of the outer packaging.

The heater may include a plurality of linear portions extending along the length direction of the outer packaging, and a connection portion connecting each of the adjacent linear portions, and the connection portion may be elastically deformed along a radius of curvature of the outer circumferential surface of the outer packaging.

A thickness of the heater may be 0.5 mm or less.

The heater may include Inconel material.

The electrode assembly may be a jellyroll-type electrode assembly in which the positive electrode, the separator and the negative electrode are wound, and the heater may be disposed at the outer circumferential surface of the outer packaging covering an end of a separator exposed beyond the positive electrode or the negative electrode.

The heater may be located within one third of a length of the outer packaging from the end in the length direction of the outer packaging.

The heater may be located within 20 mm from the end in the length direction of the outer packaging.

A heater according to the present disclosure is disposed at a cylindrical outer packaging, formed to be bent along a circumferential direction of the outer packaging, disposed at an outer circumferential surface of the outer packaging to generate heat, and disposed closer to an end in a length direction of the outer packaging than a center in the length direction of the outer packaging.

The heater may include a linear portion extending along the length direction of the outer packaging, and a connection portion connecting the adjacent linear portions such that the linear portions extend in a zigzag, and the connection portion may be elastically deformed along a radius of curvature of the outer circumferential surface of the outer packaging.

The heater may be 0.5 mm or less in thickness.

The heater may include Inconel material.

The outer packaging may accommodate a jellyroll-type electrode assembly in which a positive electrode, a separator and a negative electrode are wound, and the heater may be disposed at the outer circumferential surface of the outer packaging covering an end of the separator exposed beyond the positive electrode or the negative electrode.

### ADVANTAGEOUS EFFECTS

The heater according to the present disclosure and the test cell including the same have an effect of preventing damage to the outer packaging during the test for preventing thermal propagation of the battery cell, by applying heat to the separator exposed beyond the positive electrode or the negative electrode to induce thermal runaway rapidly.

### BRIEF DESCRIPTION OF THE DRAWINGS

FIG. 1 is a perspective view of a test cell according to the present disclosure.
FIG. 2 is a front view showing the detailed configuration of a heater according to the present disclosure.
FIG. 3 is a cross-sectional view showing the internal configuration of the test cell according to the present disclosure.
FIG. 4 is an enlarged view of section A in FIG. 3.

### BEST MODE

Hereinafter, the exemplary embodiments of the present disclosure will be described with reference to the accompanying drawings in sufficient detail to enable persons having ordinary skill in the technical field pertaining to the present disclosure to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the subject matter of the present disclosure is omitted, and in affixing the reference numerals to the elements in each drawing, the identical or similar reference numerals are affixed to the identical or similar elements throughout the specification.

Additionally, it should be understood that the terms or words used in the specification and the appended claims should not be construed as limited to general and dictionary meanings, and rather, should be interpreted based on the meanings and concepts corresponding to the technical aspects of the present disclosure on the basis of the principle that the inventor is allowed to define the terms appropriately for the best explanation.

### Test cell

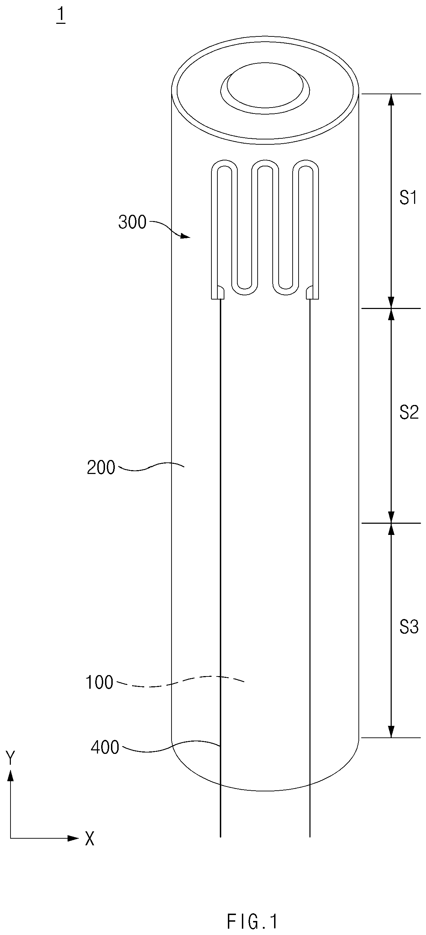

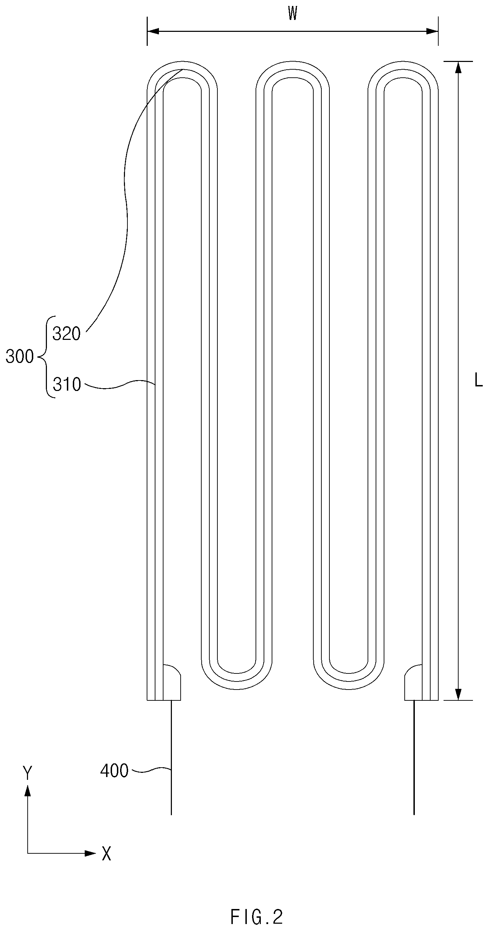

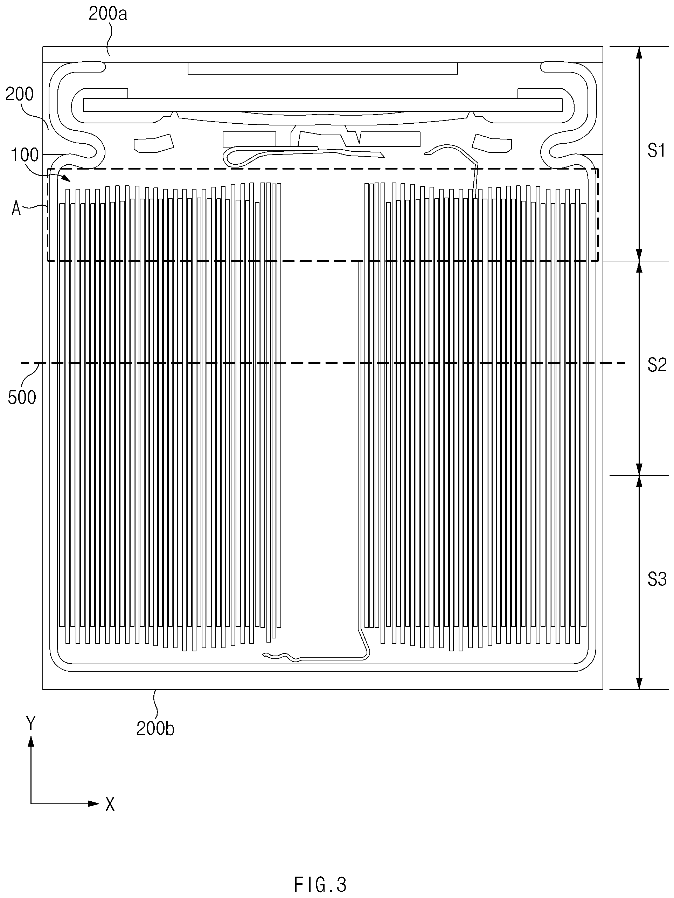

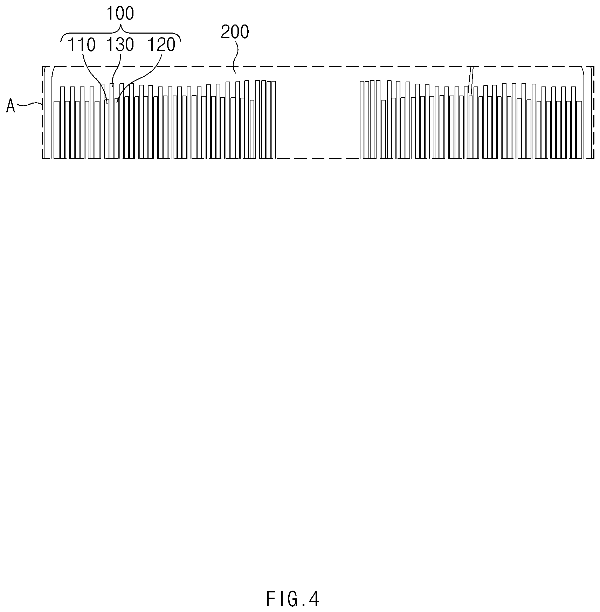

FIG. 1 is a perspective view of a test cell according to the present disclosure, FIG. 2 is a front view showing the detailed configuration of a heater according to the present disclosure, FIG. 3 is a cross-sectional view showing the internal configuration of the test cell according to the present disclosure, and FIG. 4 is an enlarged view of section A in FIG. 3.

Referring to FIGS. 1 to 4, the test cell 1 according to the present disclosure may include an electrode assembly 100, an outer packaging 200 and a heater 300.

When a battery cell including the electrode assembly 100 and the outer packaging 200 increases in temperature, thermal propagation may occur, and the test cell 1 according to the present disclosure may apply heat of various temperatures to the outer packaging 200, measure the temperature of the outer packaging 200 for the occurrence of thermal propagation and the temperature of heat applied to the outer packaging 200, and monitor and collect temperature data necessary for preventing thermal propagation.

The electrode assembly 100 may be a jellyroll-type electrode assembly in which a positive electrode 110 and a negative electrode 120 having a shape of a long sheet coated with an active material are wound with a separator 130 interposed between them. Here, the positive electrode 110 has a positive electrode tab (not shown) coupled to the outer packaging 200, and the negative electrode 120 has a negative electrode tab (not shown) coupled to the outer packaging 200. In this instance, the jellyroll-type electrode assembly is easy to shape into a cylinder and has high energy density per weight.

The outer packaging 200 may accommodate the electrode assembly 100 and an electrolyte solution.

In the drawings, a circumferential direction of the outer packaging 200 is indicated as "X direction", and a length direction of the outer packaging 200 is indicated as "Y direction".

The outer packaging 200 may include a metal layer, for example, an aluminum thin film to protect the internal components such as the electrode assembly 100 and the electrolyte solution, enhance electrical and chemical properties by the electrode assembly 100 and the electrolyte solution and increase heat dissipation.

According to the shape of the outer packaging 200, the secondary battery may be used to classify into a can-type secondary battery in which the electrode assembly 100 is included in a metal can and a pouch-type secondary battery in which the electrode assembly is included in a pouch of an aluminum laminate sheet.

Meanwhile, the outer packaging 200 according to the present disclosure is not limited to a particular shape, but the outer packaging 200 is preferably formed in a cylindrical shape as shown in FIG. 1.

A heating unit of the test cell 1 according to the present disclosure is configured to test thermal propagation, and the heating unit may include the heater 300 and a thermocouple (not shown).

The heater 300 may be disposed at the outer circumferential surface of the outer packaging 200, and generate heat and apply the heat to the outer packaging 200 and the electrode assembly 100.

To attach the heater 300 to the outer circumferential surface of the cylindrical outer packaging 200, the heater 300 may be formed to be bent along the circumferential direction of the outer packaging 200. Accordingly, because the heater 300 is required to easily bend along the radius of curvature of the outer circumferential surface of the outer packaging 200, the heater 300 is preferably as thin as possible. As a specific example, the heater 300 may be 0.5 mm or less in thickness.

In addition, to prevent fires and corrosion of the heater 300, the heater 300 may include Inconel material having good heat resistance and corrosion resistance. The Inconel material has good heat resistance, high rigidity and good oxidation resistance at high temperature of 900° (on Celsius scale) or more.

As a specific example, the Inconel material may be Inconel 600. Inconel 600 is an alloy containing 15.5 wt% of chromium (Cr), 6 to 7 wt% of iron (Fe), and the remaining amount of nickel, and has good heat resistance, high mechanical properties and high corrosion resistance.

The heater 300 according to the present disclosure may be disposed at the outer circumferential surface of the outer packaging 200 and closer to an end in the length direction of the outer packaging 200 than a center 500 in the length direction of the outer packaging 200. As an example, the heater 300 may be disposed closer to an uppermost end 200a of the outer packaging 200 than the center 500 in the length direction of the outer packaging 200. As another example, the heater 300 may be disposed closer to a lowermost end 200b of the outer packaging 200 than the center 500 in the length direction of the outer packaging 200.

Meanwhile, when the positive electrode 110 and the negative electrode 120 are brought into direct contact with each other, a short circuit may occur, causing thermal runaway, and in order to prevent this, the separator 130 may serve to block the physical contact between the positive electrode 110 and the negative electrode 120.

Here, when the internal temperature of the outer packaging 200 rises due to heat generated from the heater 300, the separator 130 shrinks, and because the end of the separator 130 is exposed from the positive electrode 110 or the negative electrode 120, the end portion of the separator 130 may shrink faster than its central portion.

Because the test cell 1 according to the present disclosure includes the heater 300 disposed closer to the end in the length direction of the outer packaging 200 than the center 500 in the length direction of the outer packaging 200, the separator 130 may shrink faster, and accordingly, a short circuit caused by the contact between the positive electrode 110 and the negative electrode 120 may be accelerated, and thermal runaway may occur more quickly.

In this instance, in the thermal propagation test, in case of delayed thermal runaway, the exposure time of the outer packaging 200 to high temperature increases, causing a tear in the outer packaging 200.

When considering that the thermal propagation test using the test cell 1 is performed to acquire temperature information necessary for the occurrence of thermal propagation, the test cell 1 according to the present disclosure may trigger thermal runaway as quickly as possible, thereby preventing damage to the outer packaging 200 that may occur during the thermal propagation test.

The heater 300 of the test cell 1 according to the present disclosure may be disposed at the end of the outer circumferential surface of the outer packaging 200.

As an example, the heater 300 may be disposed at the outer packaging 200 covering the top of the separator 130 exposed beyond the positive electrode 110 or the negative electrode 120. As another example, the heater 300 may be disposed at the outer packaging 200 covering the bottom of the separator 130 exposed beyond the positive electrode 110 or the negative electrode 120.

The heater 300 may be located within one third of the length of the outer packaging 200 from the end of the length direction of the outer packaging 200. Preferably, the heater 300 may be located within 20 mm from the end in the length direction of the outer packaging 200.

Specifically, when dividing the outer circumferential surface of the outer packaging 200 into three equal parts along the length direction (Y direction), the outer circumferential surface of the outer packaging 200 may be divided into an upper area S1, a middle area S2 and a lower area S3.

In this instance, the heater 300 may be disposed at the upper area S1 or the lower area S3.

As an example, the heater 300 may be disposed at the upper area S1, but does not go beyond the upper area S1 and may be located within the upper area S1. That is, the lowermost end of the heater 300 may be disposed at an equal or higher location than the lowermost end of the upper area S1.

As another example, the heater 300 may be disposed at the lower area S3, but does not go beyond the lower area S3 and may be located within the lower area S3. That is, the uppermost end of the heater 300 may be disposed at an equal or lower location than the uppermost end of the lower area S3.

When the heater 300 is disposed at the upper area S1 or the lower area S2 of the outer circumferential surface of the outer packaging 200, the location at which the separator 130 is exposed from the positive electrode 110 or the negative electrode 120 and the location of the heater 300 are closest to each other. Accordingly, heat generated from the heater 300 may be transferred to the end of the separator 130 with little or no loss, and through this, the separator 130 may shrink faster and thermal runaway may occur quickly, thereby preventing damage to the outer packaging 200.

The heater 300 according to the present disclosure may be an electric heater including an electric resistor, and be connected to an external wire 400.

The thermocouple of the heating unit according to the present disclosure may measure the temperature of at least one of the outer packaging 200 or the heater 300. The thermocouple may be a wire-type temperature sensor, information sensed through the thermocouple may be transmitted to a sensing unit (not shown) through the wire, and the sensing unit may acquire temperature information of the battery cell including the electrode assembly 100 and the outer packaging 200. In this instance, the heater 300 may generate heat up to maximum temperature at which thermal propagation does not occur, and the thermocouple may measure the maximum temperature to acquire information associated with minimum temperature for the occurrence of thermal propagation.

The heater 300 may include a linear portion 310 and a connection portion 320.

The linear portion 310 may include a plurality of linear portions, and each linear portion 310 may extend along the length direction (Y direction) of the outer packaging 200. In this instance, a length L of the linear portion 310 may be 40 mm or less. In addition, the external wire 400 may be connected to the end of the outermost linear portion 310.

The connection portion 320 may connect each adjacent linear portion 310.

The heater 300 according to the present disclosure may have a larger sum W of widths of the connection portions 320 than heaters commonly used in battery cells. As a specific example, the sum W of widths of the connection portions 320 may be 16.5 mm or more.

In the heater 300 according to the present disclosure, a ratio of the sum W of widths of the connection portions 320 to the length L of the linear portions 310 may be 0.4 or more.

When the heater 300 is attached to the outer circumferential surface of the outer packaging 200, the connection portions 320 are bent along the width direction, so the connection portions 320 having a larger width may be easily bent along the circumferential direction of the outer packaging 200.

In addition, when the heater 300 is attached to the outer circumferential surface of the outer packaging 200, the connection portions 320 are bent along the circumferential direction (X direction) of the outer packaging 200, so the connection portions 320 may be elastically deformed along the radius of curvature of the outer circumferential surface of the outer packaging 200.

Because the outer packaging 200 accommodating the jellyroll-type electrode assembly 100 is cylindrical in shape, the outer circumferential surface of the outer packaging 200 has curvature, making it difficult for the heater 300 to easily attach. However, the test cell 1 according to the present disclosure may allow the heater 300 to easily attach to the cylindrical outer packaging 200 because the connection portions 320 are easily bent along the circumferential direction of the outer circumferential surface of the outer packaging 200.

### Heating unit

Referring back to FIG. 2, the heating unit according to the present disclosure may include the heater 300 and the thermocouple (not shown).

The heater 300 may be disposed at the cylindrical outer packaging, formed to be bent along the circumferential direction of the outer packaging 200, disposed at the outer circumferential surface of the outer packaging 200 to generate heat, and disposed closer to the end 200a, 200b in the length direction of the outer packaging 200 than the center 500 in the length direction of the outer packaging 200.

In this instance, for details of the components mentioned in the heating unit, reference may be made to the above description of each component of the test cell 1 according to the present disclosure.

According to the heating unit, the location at which the separator 130 is exposed from the positive electrode 110 or the negative electrode 120 and the location of the heater 300 are closest to each other. Accordingly, heat generated from the heater 300 may be transferred to the end of the separator 130 with little or no loss, and through this, the separator 130 may shrink faster and thermal runaway may occur quickly, thereby preventing damage to the outer packaging 200.

When considering that the thermal propagation test using the test cell 1 is performed to acquire temperature information necessary for the occurrence of thermal propagation, the heating unit may trigger thermal runaway as quickly as possible, thereby preventing damage to the outer packaging 200 that may occur during the thermal propagation test.

Although the present disclosure has been hereinabove described with regard to a certain number of embodiments and drawings, the present disclosure is not limited thereto, and the present disclosure may be embodied in different forms by persons having ordinary skill in the technical field pertaining to the present disclosure within the technical scope of the present disclosure and the appended claims and their equivalents.

### [List of Reference Numerals]

- 100:: Electrode assembly
- 110:: Positive electrode
- 120:: Negative electrode
- 130:: Separator
- 200:: Outer packaging
- 300:: Heater
- 310:: Linear portion
- 320:: Connection portion

## Claims

1. A test cell comprising:
an electrode assembly;
a cylindrical outer packaging accommodating the electrode assembly; and
a heater formed to be bent along a circumferential direction of the outer packaging and disposed at an outer circumferential surface of the outer packaging to generate heat,
wherein the heater is disposed closer to an end in a length direction of the outer packaging than a center in the length direction of the outer packaging, and disposed at the outer circumferential surface of the outer packaging covering an end of a separator exposed beyond a positive electrode or a negative electrode of the electrode assembly.

2. The test cell according to claim 1,
wherein the heater includes:
a plurality of linear portions extending along the length direction of the outer packaging; and
a connection portion connecting each of the adjacent linear portions, and
wherein the connection portion is elastically deformed along a radius of curvature of the outer circumferential surface of the outer packaging.

3. The test cell according to claim 1,
wherein a thickness of the heater is 0.5 mm or less.

4. The test cell according to claim 1,
wherein the heater includes Inconel material.

5. The test cell according to claim 1,
wherein the electrode assembly is a jellyroll-type electrode assembly in which the positive electrode, the separator and the negative electrode are wound.

6. The test cell according to claim 1,
wherein the heater is located within one third of a length of the outer packaging from the end in the length direction of the outer packaging.

7. The test cell according to claim 1,
wherein the heater is located within 20 mm from the end in the length direction of the outer packaging.

8. A heater disposed at a cylindrical outer packaging, wherein the heater is formed to be bent along a circumferential direction of the outer packaging, disposed at an outer circumferential surface of the outer packaging to generate heat, disposed closer to an end in a length direction of the outer packaging than a center in the length direction of the outer packaging, and disposed at the outer circumferential surface of the outer packaging covering an end of a separator exposed beyond a positive electrode or a negative electrode of an electrode assembly housed in the outer packaging.

9. The heater according to claim 8,
wherein the heater includes:
a linear portion extending along the length direction of the outer packaging; and
a connection portion connecting the adjacent linear portions such that the linear portions extend in a zigzag, and
wherein the connection portion is elastically deformed along a radius of curvature of the outer circumferential surface of the outer packaging.

10. The heater according to claim 8,
wherein the heater is 0.5 mm or less in thickness.

11. The heater according to claim 8,
wherein the heater includes Inconel material.

12. The heater according to claim 8,
wherein the electrode assembly is a jellyroll-type electrode assembly in which the positive electrode, the separator and the negative electrode are wound.
